# EUROPÄISCHE PATENTSCHRIFT

(11) **EP 4 492 047 B1**
(45) Veröffentlichungstag und Bekanntmachung des Hinweises auf die Patenterteilung: **25.02.2026**
(21) Anmeldenummer: 23185673.3
(22) Anmeldetag: 14.07.2023
(51) Int. Cl.: G01N 21/88, G01N 21/95, B65B 9/04

(54) **VORRICHTUNG ZUM HERSTELLEN VON GEFÜLLTEN FOLIENBEUTELN**
DEVICE FOR PRODUCING FILLED FILM BAGS
DISPOSITIF POUR LA FABRICATION DE SACHETS EN FEUILLE REMPLIS

(43) Veröffentlichungstag der Anmeldung: 15.01.2025
(73) Patentinhaber: Harro Höfliger Verpackungsmaschinen GmbH, 71573 Allmersbach im Tal (DE)
(72) Erfinder: Messerschmid, Matthias, 71573 Allmersbach im Tal (DE); Augustin, Tobias, 71573 Allmersbach im Tal (DE)
(74) Vertreter: Zurhorst, Stefan

(56) Entgegenhaltungen:
- JP-A- 2001 349 837
- JP-A- 2018 084 496
- US-A1- 2005 050 451
- US-A1- 2013 219 996
- US-A1- 2017 030 797
- US-A1- 2019 066 288
- NINA CHEN: "GOING POLARIZED: ADDING A NEW PERSPECTIVE TO INDUSTRIAL IMAGING", 8 November 2018 (2018-11-08), XP055617610, Retrieved from the Internet <URL:https://d1f5bev2h902zo.cloudfront.net/wp-content/uploads/2018/11/Going-Polarized-Presentation.pdf> [retrieved on 20190902]

## Beschreibung

Die Erfindung betrifft eine Vorrichtung zum Herstellen von gefüllten Folienbeuteln mit den Merkmalen nach dem Oberbegriff des Anspruchs 1.

In vielen Anwendungsbereichen insbesondere des Haushaltes kommen zunehmend Folienbeutel beispielsweise mit Wasch- oder Spülmittel als Inhaltsstoff zum Einsatz. Solche Folienbeutel werden verbreitet aus wasserlöslichem Folienmaterial wie PVOH (Polyvinylalkohol) gefertigt, welches sich bei Wasserkontakt auflöst und den Inhaltsstoff freigibt.

Eine typische Herstellungsvorrichtung für solche Folienbeutel umfasst Plattenelemente mit Formmulden, welche zu verschiedenen Bearbeitungsstationen verfahrbar sind. In einer ersten Bearbeitungsstation mit einer Tiefziehanordnung wird eine Basisfolie zunächst in die Formmulden tiefgezogen, sodass in der Basisfolie Füllkavitäten entstehen. Diese Füllkavitäten werden in einer nachfolgenden zweiten Bearbeitungsstation mit einem Füllgut befüllt. Darauf folgt eine dritte Bearbeitungsstation mit einer Siegelanordnung. Dort wird eine Deckfolie auf die Basisfolie unter Bildung jeweils eines um die jeweilige Füllkavität geschlossen umlaufenden Siegelrandes aufgesiegelt. Aus einer solchermaßen gesiegelten Bahn werden schließlich einzelne Folienbeutel ausgetrennt und vereinzelt.

Der Qualität des Siegelrandes kommt besondere Bedeutung zu. Selbst kleine Siegeldefekte beispielsweise durch zwischenliegendes Füllgut können eine Undichtigkeit des Produkts verursachen, was zu unerwünschten Folgeerscheinungen Verschmutzungen der Füllmaschine führt und unbrauchbare Verkaufsverpackungen nach sich ziehen kann. In der US 2017/0030797 A1 ist die Herstellung von Folienpouches beschrieben, wobei auf das Tiefziehen, das Füllen und das Versiegeln der Pouches eine kameragestützte Kontrolle hinsichtlich Fehler insbesondere in den Siegelnähten folgt. Die US 2013/0219996 A1 beschreibt ebenfalls eine maschinelle optische Prüfung von Pouches auf mögliche Leckagen. Hierzu wird der Pouchinhalt mit einer für die maschinelle Optik sichtbaren Beimischung versehen. Die US 2019/0066288 A1 schlägt für die Prüfung von Folienbehältern die Verwendung u. a. eines schwarzen Hintergrundes als Kontraststeigerung für die Detektierung von Partikeln im Folienbehälter vor. Gemäß der JP 2001 349837 A wird eine Folienverpackung mit polarisiertem Licht beleuchtet. Auf diese Weise sollen Einschlüsse zwischen den Folien besser für die Kamera sichtbar gemacht werden.

Der Erfindung liegt die Aufgabe zugrunde, eine eingangs genannte Vorrichtung derart weiterzubilden, dass die Qualität des fertigen Siegelrandes im laufenden Betrieb zuverlässig bewertet werden kann.

Diese Aufgabe wird durch eine Vorrichtung mit den Merkmalen des Anspruchs 1 gelöst. Nach der Erfindung ist vorgesehen, dass der dritten Bearbeitungsstation mit der Siegelanordnung eine vierte Bearbeitungsstation mit einer Prüfeinrichtung zur optischen Erfassung und zur Qualitätsbewertung des Siegelrandes nachgeordnet ist. Dabei umfasst die Prüfeinrichtung eine optische Kamera, Mittel zur Kontraststeigerung der von der Kamera aufgenommenen Bilder, eine Beleuchtungseinrichtung, sowie eine Auswerteeinheit für die von der Kamera aufgenommenen Bilder.

Die Erfindung erlaubt eine insbesondere 100%ige In-Prozess-Kontrolle, ob die erzeugten Siegelränder von ausreichender Qualität und damit Dichtigkeit sind. Die Kamera erfasst die versiegelten Folienbahnen im Bereich von einem oder mehreren Folienbeuteln und fertigt ein oder mehrere Bilder davon an. Die Mittel zur Kontraststeigerung beeinflussen das aufgenommene Bild derart, dass eine deutliche Unterscheidung zwischen dem Siegelrand, eventuellen Fehlern im Siegelrand und den übrigen Bereichen des Folienbeutels wie beispielsweise der Füllkavität und der darin befindlichen Füllung möglich ist. In der Auswerteeinheit erfolgt dann eine elektronische Bilderkennung beziehungsweise Bildauswertung mittels eines geeigneten Algorithmus. Anhand des Auswertungsergebnisses kann festgehalten werden, ob eine ausreichende Qualität des Siegelrandes vorliegt. Falls dies nicht der Fall ist, kann der entsprechende Folienbeutel nach dem Austrennen ausgesondert und entsorgt werden. Insgesamt kann mit hoher Prozesssicherheit die gewünschte Dichtigkeit der Folienbeutel sichergestellt werden.

In einer bevorzugten Ausführungsform umfassen die Mittel zur Kontraststeigerung eine reflexionsmindernde Oberfläche der Plattenelemente. Die Reflexionsminderung kann beispielsweise durch eine Mattierung der ansonsten blank metallischen Oberfläche erreicht werden. Insbesondere ist die reflexionsmindernde Oberfläche durch eine Schwärzung der Oberfläche gebildet. In der Praxis hat sich herausgestellt, dass hierbei eine besonders gute Unterscheidung zwischen einem ordnungsgemäßen Siegelrand und eventuellen Fehlern darin möglich ist.

Gemäß der Erfindung umfassen die Mittel zur Kontraststeigerung einen Polarisationsfilter der Beleuchtungseinrichtung und eine Ausbildung der Kamera als Polarisationskamera. Dies beruht auf der Erkenntnis, dass Folien aufgrund ihres Herstellungsprozesses durch Extrudieren und/oder Blasen eine mehr oder weniger ausgeprägte Vorzugsrichtung haben, die beim Prozess des Siegelns zum Vorschein kommt. Bei einem Anlösen der Folienoberfläche insbesondere beim Feuchtsiegeln führt die genannte Vorzugsrichtung im polarisierten Licht unter bestimmten Umständen zum klaren Sichtbarwerden von vollständig oder unzureichend versiegelten Stellen. Die erzielbaren Kontraste sind so gut, dass eine Qualitätsbewertung unter Umständen auch ohne eine kostenintensive reflexionsmindernde Oberfläche der Plattenelemente möglich ist.

Erfindungsgemäß ist eine Polarisationsrichtung des Polarisationsfilters in einem Polarisationswinkel zu einer Bewegungsrichtung der Plattenelemente ausgerichtet, wobei der Polarisationswinkel in einem Bereich von 30° bis 60° liegt und insbesondere 45° beträgt. Dies trägt dem Umstand Rechnung, dass die Folienbahnen im Regelfall eine durch deren Längsrichtung vorgegebene Vorzugsrichtung haben, die wiederum der Bewegungsrichtung der Plattenelemente entspricht. Der genannte Polarisationswinkel führt unter diesen Voraussetzungen zu einer ausgeprägten Kontraststeigerung und damit zu der Möglichkeit einer zuverlässigen Qualitätsbewertung.

In einer bevorzugten Ausführungsform sind die Plattenelemente mit einer Markierung zur Lageerkennung des Siegelrandes versehen. Dem liegt die Erkenntnis zugrunde, dass die erzielbaren Kontraste für sich alleine genommen nicht immer ausreichen, um den Siegelrand von anderen Bildteilen wie beispielsweise die Füllkavität und das darin enthaltene Füllgut zu unterscheiden. Anhand einer geeigneten Markierung kann jedoch das Bild durch virtuelle Drehung und Verschiebung in Überdeckung mit der tatsächlichen Behältergeometrie gebracht werden. Dies erlaubt es, bestimmte Bildkontraste eindeutig dem zu untersuchenden Siegelrand zuzuordnen, was Möglichkeit einer zuverlässigen Qualitätsbewertung unterstützt.

In einer vorteilhaften Ausführungsform ist die Kamera eine Zeilenkamera. Eine Bildzeile liegt dabei quer zur Bewegungsrichtung der Plattenelemente. Die Bewegung der Plattenelemente führt zu einem Bildaufbau aus einer Vielzahl solcher Bildzeilen, wobei eine hohe Bildauflösung erzielbar ist. Eine getaktete Unterbrechung des Plattenvorschubes eigens für die Bildgebung ist nicht erforderlich, was die Integration der optischen Siegelnahtkontrolle in den übrigen Herstellungsprozess vereinfacht. Parallaxenfehler bei der Bildgebung sind auf ein Minimum reduziert. Außerdem sind nur vergleichsweise einfache Anforderungen an die Bildausleuchtung zu berücksichtigen, da Unterschiede der Beleuchtungsintensität in der Bewegungsrichtung ohne Belang sind.

Die Zeilenkamera nimmt immer nur eine einzige Bildzeile in schneller Abfolge auf. Damit aus solchen Bildzeilen ein zweidimensionales Bild entsteht, muss die Abfolge der Bildzeilen mit einer Bewegung der Formatplatten in Relation gesetzt werden. In verbreiteter Bauform werden die Formatplatten als Endloskette auf einer Umlaufbahn mittels eines Servomotors bewegt. Ein solcher Servomotor kann seine aktuelle Position an das Kamerasystem ausgeben und könnte somit als Encoder für die Formatplatten-Bewegung fungieren. Allerdings hat sich gezeigt, dass die tatsächliche Bewegung der Formatplatten am Ort der Kamera nicht immer ausreichend gleichmäßig ist, und nicht mit der Antriebsbewegung des Servomotors korreliert. Es wirken nämlich verschiedene Störgrößen auf den Plattentransport ein. Zum einen ist eine ungleichmäßige Streckung der Kettenglieder der Transportkette zu beobachten. Zum anderen werden die Formatplatten über einen Vakuumkanal gezogen, was zu großer Haftreibung und ruckartigen Positionsänderungen beim Beschleunigen und Stoppen des Transportes führt. Die genannten Effekte sind in der Maschinenmitte (Gesamtlänge ca. 18m), also etwa an der Stelle, an der auch die Kamera montiert ist, am stärksten.

In bevorzugter Weiterbildung ist deshalb ein separater Encoder im Bereich der Zeilenkamera zur Bewegungserfassung der Plattenelemente angeordnet. Hierdurch können die vorstehend genannten Ungleichförmigkeiten der Plattenbewegung mitberücksichtigt werden, sodass eine exakte Synchronisation zwischen der Plattenbewegung und der Aufnahmesequenz der Zeilenkamera erreicht werden kann.

Der an der genannten Stelle angebrachte Encoder kann mit einem auf den Plattenelementen abrollenden Laufrad oder mit anderen Mitteln zur Bewegungserfassung versehen sein. Es hat sich jedoch gezeigt, dass es unter realen Produktionsbedingungen beispielsweise beim Abfüllen von pulvrigem und/oder flüssigem Waschmittel zu derartigen Kontaminierungen der Formatplatte kommen kann, dass ein sauberes Abrollen nicht mit ausreichender Zuverlässigkeit sichergestellt werden kann. Vorteilhaft ist deshalb der Encoder mit einem berührungslosen Sensor und insbesondere mit einem Lasersensor zur Bewegungserfassung der Plattenelemente versehen. Beispielsweise durch Nutzung des Dopplereffekts können sowohl ein ungleichmäßiges Verhalten des Antriebstrangs berücksichtigt werden, als auch negative Einflüsse durch Kontamination ausgeschlossen werden. Eine exakte Bewegungserfassung und in der Folge eine exakte Synchronisation der Aufnahmesequenz der Zeilenkamera mit der Plattenbewegung sind auch unter rauen Produktionsbedingungen möglich.

Alternativ kann es zweckmäßig sein, dass die Kamera eine Flächenkamera ist. Mit einfachen Mitteln ohne Synchronisierungsaufwand kann hierbei in kürzester Zeit ein vollständiges Bild der zu prüfenden Fläche gewonnen werden.

In einer vorteilhaften Ausführungsform ist die Beleuchtungseinrichtung als Lichtleiste ausgeführt, welche quer zu einer Bewegungsrichtung der Plattenelemente angeordnet ist. Hierdurch kann eine gleichmäßige Ausleuchtung zumindest quer zur genannten Bewegungsrichtung erzielt werden, was insbesondere in Kombination mit einer Zeilenkamera gewünscht ist. Darüber hinaus stellt die Lichtleiste auch eine gute Basis für einen Polarisationsfilter und damit für eine Bildausleuchtung mit polarisiertem Licht dar.

Ausführungsbeispiele der Erfindung sind nachfolgend anhand der Zeichnung näher beschrieben. Es zeigen:
- Fig. 1: in einer schematischen Übersichtsdarstellung eine erfindungsgemäße Vorrichtung zum Herstellen von gefüllten Folienbeuteln mit Tiefziehanordnung, Füllanordnung, Siegelanordnung und optischer Prüfeinrichtung,
- Fig. 2: in einer schematischen Draufsicht die Anordnung nach Fig. 1 im Bereich der Prüfeinrichtung mit einer als Lichtleiste ausgeführten Beleuchtungseinrichtung und mit einer Zeilenkamera,
- Fig. 3: in einer schematischen Draufsicht einen mittels der Vorrichtung nach den Figuren 1, 2 hergestellten Folienbeutel mit einem umlaufenden Siegelrand,
- Fig. 4: in einer Seitenansicht eine Variante der Anordnung nach den Fig. 1, 2 mit einer einen Beleuchtungsdom umfassenden Beleuchtungseinrichtung und mit einer Flächenkamera,
- Fig. 5: in einer schematischen Frontansicht eine Variante der Lichtleiste nach den Fig. 1, 2 mit einem der Lichtleiste vorgeschalteten Polfilter bei einem Polarisationswinkel von 45°,
- Fig. 6: in einer schematischen Perspektivansicht einen Ausschnitt des Bildsensors der Zeilenkamera nach den Fig. 1, 2 bei einer optionalen Ausführung als Polarisationskamera, und
- Fig. 7: in einer schematischen Draufsicht einen Ausschnitt des Bildsensors der Flächenkamera nach Fig. 4 bei einer optionalen Ausführung als Polarisationskamera.

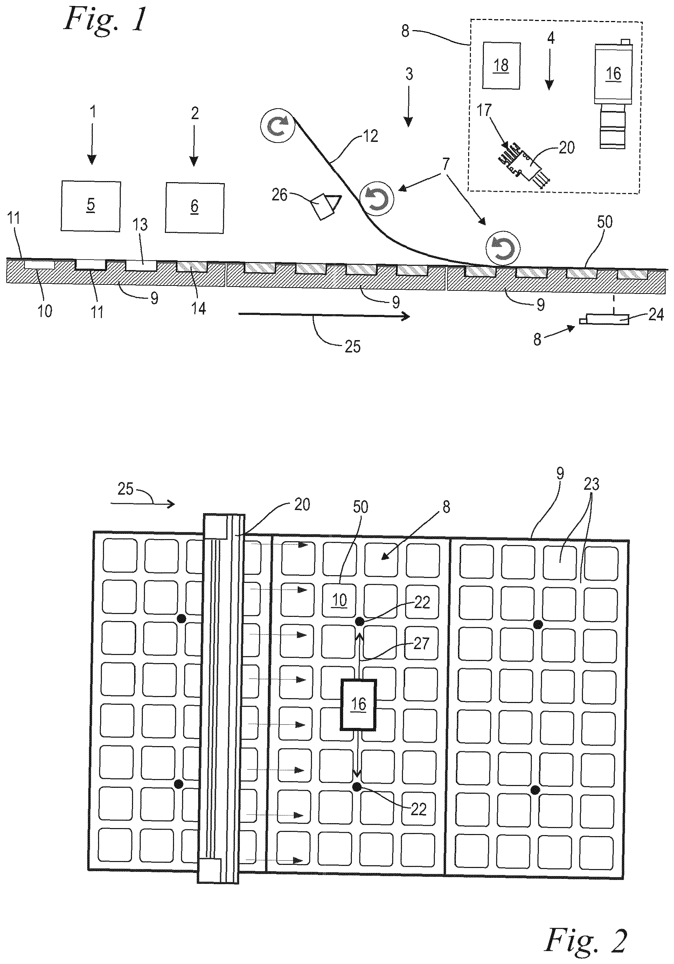

Fig. 1 zeigt in einer schematischen Übersichtsdarstellung eine erfindungsgemäße Vorrichtung zum Herstellen von gefüllten Folienbeuteln 50. Die Folienbeutel 50 werden aus einer tiefgezogenen Basisfolie 11 mit Füllkavitäten 13, aus einem in die Füllkavitäten 13 eingefülltem Füllgut 14, und aus einer aufgesiegelten Deckfolie 12 hergestellt. Im Rahmen der Erfindung können beliebige Folienmaterialien verwendet werden. Vorliegend handelt es sich bei der Basisfolie 11 und bei der Deckfolie 12 um wasserlösliche Folien insbesondere aus PVA (Polyvinylalkohol). Auch das Füllgut 14 kann im Rahmen der Erfindung frei gewählt werden. Vorliegend handelt es sich um Waschmittel oder Spülmittel in pulvriger und/oder flüssiger Form.

Die Vorrichtung umfasst eine Reihe von Bearbeitungsstationen, von denen hier eine Auswahl mit einer ersten Bearbeitungsstation 1, einer zweiten Bearbeitungsstation 2, einer dritten Bearbeitungsstation 3, und einer vierten Bearbeitungsstation 4 schematisch angedeutet ist. Eine Vielzahl von Plattenelementen 9 ist miteinander zu einer geschlossenen Kette verbunden. Diese Kette wird im Betrieb von einem nicht dargestellten Antrieb kontinuierlich und umlaufend angetrieben. Zur besseren Übersicht ist hier nur ein Ausschnitt des in Hochrichtung oberen Kettenabschnitts gezeigt, der im Bild von links nach rechts in einer Bewegungsrichtung 25 kontinuierlich nacheinander zu den verschiedenen Bearbeitungsstationen 1, 2, 3, 4 verfahren wird. Es kann aber auch ein intermittierender Betrieb vorgesehen sein. Nach Fertigstellung der Folienbeutel werden die dann entleerten Plattenelemente 9 in nicht dargestellter Weise als unterer Kettenabschnitt unterhalb des hier dargestellten oberen Kettenabschnitts in einer geschlossenen Umlaufbahn zur Ausgangsposition zurückgeführt.

Aus der Zusammenschau mit Fig. 2 ergibt sich, dass die einzelnen Plattenelemente 9 jeweils mehrere in Form einer Matrix angeordnete Formmulden 10 aufweisen. Die Formmulden sind hier der Einfachheit halber schematisch mit quadratischem Grundriss und mit gerundeten Ecken dargestellt. In der Praxis werden beliebige andere Grundrisse gewählt, wobei für jeweils einen einzelnen Folienbeutel 50 mehrere Formmulden 10 für mehrere, verschiedene Füllgüter 14 zu Gruppen zusammengefasst sein können.

Zunächst wird die Basisfolie 11 flach auf die Plattenelemente 9 aufgelegt. Die hier dargestellte erste Bearbeitungsstation 1 umfasst eine nur in Blockdarstellung angedeutete Tiefziehanordnung 5. Mit dieser wird die Basisfolie 11 bis zur Plastifizierung erwärmt und dann mittels Vakuum in die Formmulden 10 der Plattenelemente 9 tiefgezogen. Hierdurch werden in der Basisfolie 11 Füllkavitäten 13 gebildet. Die Plattenelemente 9 werden anschließend gemeinsam mit der tiefgezogenen Basisfolie 11 weiter zur zweiten Bearbeitungsstation 2 geführt, welche eine nur in Blockdarstellung angedeutete Füllanordnung 6 umfasst. Mittels der Füllanordnung 6 werden abgemessene Teilmengen des genannten Füllgutes 14 in die Füllkavitäten 13 eingefüllt. Im nachfolgenden Bearbeitungsschritt durchlaufen die Plattenelemente 9 gemeinsam mit der tiefgezogenen Basisfolie 11 und dem eingefüllten Füllgut 14 die dritte Bearbeitungsstation 3 mit einer nur in Blockdarstellung angedeuteten Siegelanordnung 7. Dort wird die Deckfolie 12 auf ihrer der Basisfolie 11 zugewandten Unterseite mittels einer Befeuchtungseinrichtung 26 (optional) befeuchtet, auf die Basisfolie 12 aufgelegt, und dann dort unter Einwirkung von Druck und (optional) Temperatur aufgesiegelt.

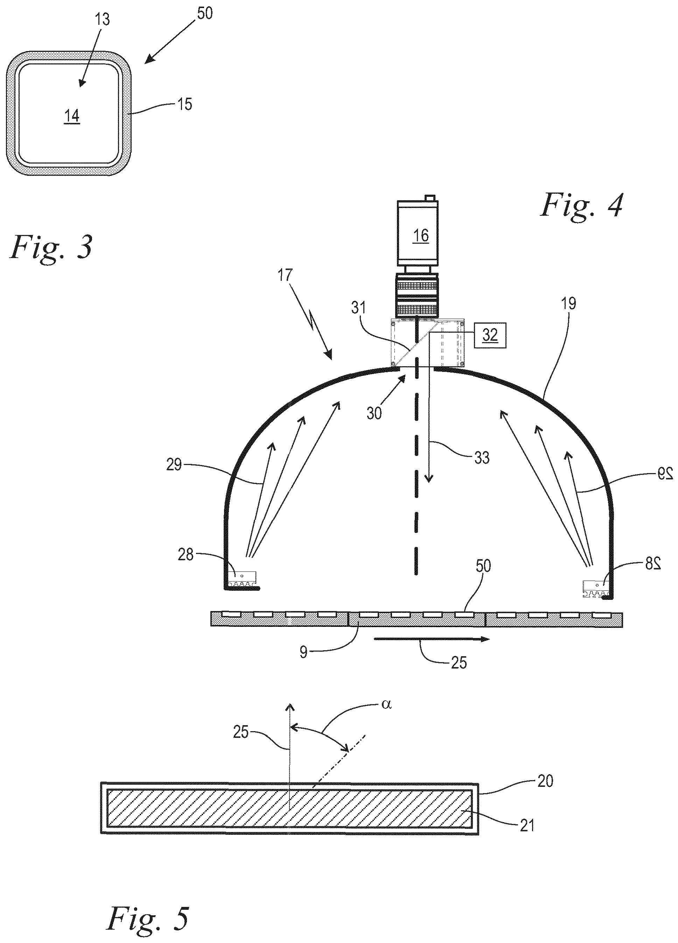

Auf diese Weise entsteht eine Bahn von vielen zusammenhängenden Folienbeuteln 50 die am Ende in nicht dargestellter Weise zu gebrauchsfertigen Einheiten vereinzelt werden. Ein solcher Folienbeutel 50 ist schematisch in einer Draufsicht in Fig. 3 gezeigt. Demnach erzeugt die Siegelanordnung 7 (Fig. 1) bei den einzelnen noch zusammenhängenden Folienbeuteln 50 jeweils einen um die mit dem Füllgut 14 gefüllte Füllkavität 13 geschlossen umlaufenden Siegelrand 15, an welchem die Deckfolie 12 dicht mit der Basisfolie 11 verbunden ist.

Erfindungsgemäß folgt der dritten Bearbeitungsstation 3 in der Bewegungsrichtung 25 eine vierte Bearbeitungsstation 4 mit einer schematisch als Block dargestellten Prüfeinrichtung 8 zur optischen Erfassung und zur Qualitätsbewertung des Siegelrandes 15. Die Prüfeinrichtung 8 umfasst eine optische Kamera 16, welche auf die Bahn von zusammenhängenden und noch in den Formmulden 10 der Plattenelemente 9 befindlichen Folienbeuteln 50 gerichtet ist. Die Prüfeinrichtung 8 umfasst ferner Mittel zur Kontraststeigerung der von der Kamera 16 aufgenommenen Bilder, eine Beleuchtungseinrichtung 17, sowie eine Auswerteeinheit 18 für die von der Kamera 16 aufgenommenen Bilder, wie es nachfolgend näher beschrieben wird.

Die Prüfeinrichtung 8 steht räumlich fest, während die Kette von Plattenelementen 9 zusammen mit der Bahn von zusammenhängenden und noch in den Formmulden 10 der Plattenelemente 9 befindlichen Folienbeuteln 50 in einer kontinuierlichen Bewegung in der Bewegungsrichtung 25 daran vorbei bewegt wird.

Fig. 2 zeigt in einer schematischen Draufsicht die Anordnung nach Fig. 1 im Bereich der Prüfeinrichtung 8. Im gezeigten Ausführungsbeispiel ist die Kamera 16 als Zeilenkamera ausgeführt und derart ausgerichtet, dass sie mit einer einzigen Momentaufnahme eine quer zur Bewegungsrichtung 25 und damit entsprechend einem Doppelpfeil 27 quer über die gesamte Breite der Plattenelemente 9 reichende Bildzeile der in den Formmulden 10 befindlichen Folienbeutel 50 macht. Die Kamera 16 erzeugt in schneller Folge eine Vielzahl solcher Bildzeilen. Diese Bildzeilen werden in die Auswerteeinheit 18 eingespeist.

Neben der Kamera 16 ist auch ein Encoder 24 zur Bewegungserfassung der Plattenelemente 9 mit der Auswerteeinheit 18 verbunden. Der Encoder 24 befindet sich bezogen auf die Bewegungsrichtung 25 im Bereich bzw. in unmittelbarer Nähe der Kamera 16, und ist in der Hochrichtung unterhalb der Plattenelemente 9 angeordnet. Der Encoder 24 ist mit einem berührungslosen Sensor, hier mit einem Lasersensor zur Bewegungserfassung der Plattenelemente 9 mittels des Dopplereffekts versehen. Die erfassten Bewegungsdaten werden in die Auswerteeinheit 18 eingespeist.

Durch die unmittelbare Nähe des Encoders 24 zur Kamera 16 entspricht die von ihm erfasste Bewegung der Plattenelemente 9 exakt derjenigen Bewegung, die bei der räumlich feststehenden Kamera 16 zu unterschiedlichen Bildzeilen führt. In der Auswerteeinheit 18 wird eine Synchronisation der unterschiedlichen Bildzeilen mit den erfassten Bewegungsdaten der Plattenelemente 9 derart vorgenommen, dass sich ein aus den Bildzeilen zusammengesetztes, verzerrungsfreies 2D-Bild der in den Formmulden 10 befindlichen Folienbeutel 50 einschließlich ihrer Siegelränder 15 (Fig. 3) ergibt.

Eine hierauf aufbauende, vorzugsweise ebenfalls in der Auswerteeinheit selbsttätig vorgenommene Qualitätsbewertung insbesondere der Siegelränder 15 (Fig. 3) setzt eine gleichmäßige Beleuchtung voraus. Da die Kamera 16 Bildzeilen quer zur Bewegungsrichtung 25 aufnimmt, kommt es vorliegend auch nur auf eine Gleichmäßigkeit der Beleuchtung in dieser Querrichtung an. Als Folge davon ist die Beleuchtungseinrichtung 17 als Lichtleiste 20 ausgeführt, welche quer zur Bewegungsrichtung 25 angeordnet ist und dabei die Plattenelemente 9 in ihrer gesamten Breite überspannt.

Als weitere Maßnahme für eine zuverlässige Qualitätsbewertung sind die eingangs schon erwähnten Mittel zur Kontraststeigerung der von der Kamera 16 aufgenommenen Bilder vorgesehen. Hierzu ist vorliegend eine der Kamera 16 zugewandte Oberfläche 23 der Plattenelemente 9 mit einer reflexionsmindernden Behandlung versehen. Dabei kann es sich um eine Mattierung bzw. Satinierung anstelle einer metallisch blanken Oberfläche 23 handeln. Im gezeigten Ausführungsbeispiel ist diese Oberfläche 23 insgesamt, also innerhalb der Formmulden 10 und auch dazwischen im Bereich der Siegelränder 15 (Fig. 3) geschwärzt. An ausgewählten Stellen ist diese Schwärzung durch kreisförmige Ausfräsungen zur Bildung von Markierungen 22 für eine Lageerkennung der Siegelränder 15 (Fig. 3) insbesondere in Unterscheidung von den Formmulden 10 unterbrochen. Demnach sind die Markierungen 22 abweichend von der übrigen Schwärzung hell bzw. metallisch blank. Für eine bessere Lesbarkeit der Zeichnung ist in Fig. 2 eine Negativdarstellung gewählt, bei der die hellen Markierungen 22 dunkel, und die übrigen geschwärzten Bereiche der Oberfläche 23 hell dargestellt sind.

Die Markierungen 22 sind derart ausgebildet, dass eine eindeutige Lagebestimmung innerhalb aller Freiheitsgrade der Bild- bzw. Plattenebene möglich ist. Es kann sich beispielsweise um ein Kreuz oder um eine andere geometrische Figur handeln. Vorliegend wurde für jedes Plattenelement 9 ein Paar von kreisförmigen punktähnlichen Flächen gewählt. Jedenfalls kann hierdurch in der Auswerteeinheit 18 eine virtuelle Verschiebung des von der Kamera 16 aufgenommenen Bildes in der Bewegungsrichtung 25, eine virtuelle Verschiebung in der quer dazu verlaufenden Seitenrichtung entsprechend dem Doppelpfeil 27, und eine virtuelle Drehung um eine senkrechte auf beide Richtungen stehende Hochachse derart vorgenommen werden, dass das aufgenommene Bild mit einer vorhandenen Sollgeometrie in Überdeckung gebracht wird. Auf diese Weise lassen sich die zu prüfenden Bereiche der Siegelränder eindeutig von anderen Bereichen wie beispielsweise die Bereiche der Formmulden 10 mit den Füllkavitäten 13 und dem Füllgut 14 unterscheiden.

Die wie vorstehend beschrieben in ihrem Kontrast gesteigerten Bilder lassen eine insbesondere automatisierte Bewertung der Qualität der Siegelränder 15 zu. Beim Siegeln eingeschlossene Verschmutzungen insbesondere vom Füllgut 14, unerwünschte Falten im Folienmaterial oder andere Fehler der Siegelränder können klar identifiziert werden. Entsprechend fehlerhafte einzelne Folienbeutel können anschließend aussortiert werden. Bei erhöhter Fehlerrate kann der Produktionsprozess auch für eine Fehlerbeseitigung unterbrochen werden. Jedenfalls lassen sich Folgeschäden durch undichte Folienbeutel zuverlässig vermeiden oder zumindest auf ein Minimum reduzieren.

Fig. 4 zeigt in einer Seitenansicht eine Variante der Anordnung nach den Fig. 1, 2, wobei die Kamera 16 als Flächenkamera ausgeführt ist. Anders als die Zeilenkamera nach den Fig. 1, 2 nimmt die Flächenkamera in einer einzigen Aufnahme ein vollständiges zweidimensionales Bild der Bahn von Folienbeuteln auf, welches sich sowohl in der Bewegungsrichtung 25 als auch quer dazu (Doppelpfeil 27 in Fig. 2) erstreckt. Ein Encoder 24 wie in Fig. 2 ist hier nicht erforderlich. Jedoch muss für eine zuverlässige Bildauswertung eine gleichmäßige Ausleuchtung des vollständigen Bildfeldes nicht nur in der Querrichtung (Doppelpfeil 27 in Fig. 2), sondern auch in der Bewegungsrichtung 25 sichergestellt sein. Hierfür umfasst die Beleuchtungseinrichtung 17 in der Anordnung nach Fig. 4 einen Beleuchtungsdom 19, welcher den Bildbereich der Flächenkamera vollständig überdeckt. Der Bildbereich ist vorzugsweise mindestens so groß wie die Grundfläche eines einzelnen Plattenelementes 9.

An seinen den Plattenelementen 9 zugewandten Kanten ist der Beleuchtungsdom 19 mit Leuchtmitteln 28 versehen, welche nicht unmittelbar auf die Plattenelemente 9 gerichtet sind, sondern welche die Innenseite des Beleuchtungsdoms 19 entsprechend Pfeilen 29 ausleuchten. Die Innenseite des Beleuchtungsdoms 19 ist mit einer Oberfläche versehen, welche das Licht der Leuchtmittel 28 diffus reflektiert und dadurch die der Kamera 16 zugewandte Oberseite der Plattenelemente 9 mit gleichmäßiger Intensität ausleuchtet.

Am oberen Scheitelpunkt des Beleuchtungsdoms 19 weist dieser eine Bildöffnung 30 auf, oberhalb derer die Kamera 16 montiert ist. Durch diese Bildöffnung 30 hindurch nimmt die Kamera Bilder der darunter befindlichen Plattenelemente 9 mit den darin befindlichen, noch zusammenhängenden Folienbeuteln 50 auf.

Zwischen der Kamera 16 und der Bildöffnung 30 befindet sich noch ein um 45° schräg gestellter halbdurchlässiger Spiegel 31. Der halbdurchlässige Spiegel 31 erlaubt durch ihn hindurch die oben beschriebene Bildaufnahme mittels der Kamera 16. Zusätzlich wird mit dem halbdurchlässigen Spiegel Licht eines weiteren Leuchtmittels 32 ins innere des Beleuchtungsdoms 19 eingespeist. Dadurch wird die an der Bildöffnung 30 fehlende Reflexion des Lichtes der unteren Leuchtmittel 28 kompensiert, sodass insgesamt eine Ausleuchtung des Bildfeldes mit gleichmäßiger Intensität erzielt wird.

Sofern nicht anders beschrieben, stimmt das Ausführungsbeispiel nach Fig. 4 in den übrigen Merkmalen und Bezugszeichen mit dem Ausführungsbeispiel nach den Fig. 1 bis 3 überein.

Ein weiteres erfindungsgemäßes Konzept der Mittel zur Kontraststeigerung der von der Kamera 16 aufgenommenen Bilder ist in den Fig. 5 bis 7 dargestellt. Hierbei umfassen die Mittel zur Kontraststeigerung einen Polarisationsfilter 21 der Beleuchtungseinrichtung 17 und eine Ausbildung der Kamera 16 als Polarisationskamera. Aus der Zusammenschau mit den Fig. 1, 2 ergibt sich eine Variante der dort gezeigten Anordnung, bei der die Lichtleiste 20 mit einem vorgeschalteten, in Fig. 5 schematisch angedeuteten Polarisationsfilter 21 versehen ist. Der Polarisationsfilter 21 polarisiert das aus der Lichtleiste 20 austretende Licht in einem Polarisationswinkel α relativ zur Bewegungsrichtung 25. Der Polarisationswinkel α liegt vorteilhaft in einem Bereich von 30° bis 60° und beträgt im gezeigten bevorzugten Ausführungsbeispiel etwa 45°. Dementsprechend wird die Bahn aus zusammenhängenden Folienbeuteln 50 (Fig. 1) mit einem in dieser Richtung polarisierten Licht ausgeleuchtet.

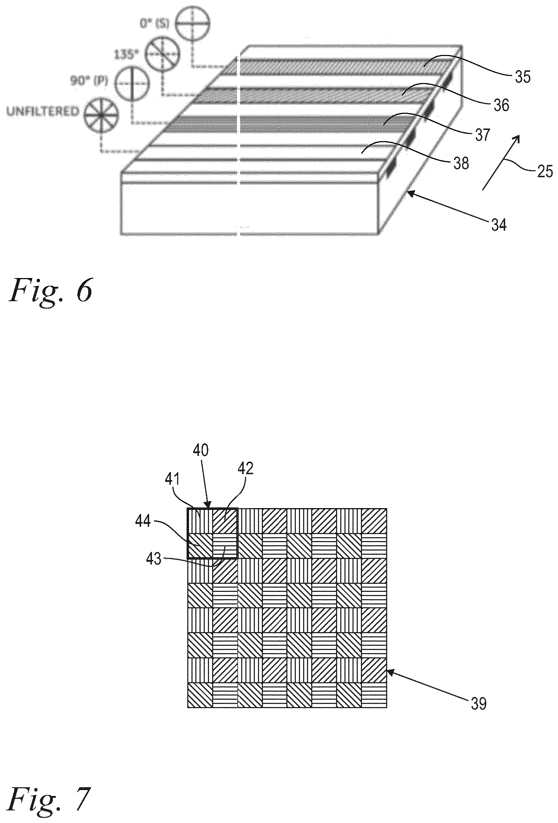

Die nach Fig. 1 als Zeilenkamera ausgeführte Kamera 16 ist in der hier beschriebenen Variante als Polarisationskamera ausgeführt. Ein zugehöriger Bildsensor 34 einer solchen als Polarisationskamera ausgeführten Zeilenkamera ist schematisch in Fig. 6 gezeigt und umfasst insgesamt vier quer zur Bewegungsrichtung 25 verlaufende Sensorstreifen 35, 36, 37, 38 mit unterschiedlichen Filtern für unterschiedliche Polarisationszustände. Ein erster Sensorstreifen 35 nimmt Bildanteile mit einem Polarisationswinkel α = 0° auf. Ein zweiter Sensorstreifen 36 nimmt Bildanteile mit einem Polarisationswinkel α = 135° auf. Ein dritter Sensorstreifen 37 nimmt Bildanteile mit einem Polarisationswinkel α = 90° auf. Und ein vierter Sensorstreifen 38 ist ohne Polfilter ausgerüstet und nimmt ungefilterte Bildsignale auf. Aus den Bildzeilensignalen aller vier Sensorstreifen 35, 36, 37, 38 lässt sich eine resultierende Bildzeile entsprechend ihres tatsächlichen Polarisationszustandes generieren.

Alternativ kann anstelle der Zeilenkamera auch eine als Polarisationskamera ausgeführte Flächenkamera zum Einsatz kommen. Ein zugehöriger Bildsensor 39 ist schematisch in Fig. 7 ausschnittsweise dargestellt. Demnach weist der Bildsensor 39 einzelne Sensorpixel 40 auf, die sich jeweils aus vier Teilpixeln 41, 42, 43, 44 zusammensetzen. Jedem Teilpixel 41, 42, 43, 44 ist je ein Polarisationsfilter mit unterschiedlicher Polarisationsrichtung vorgeschaltet. Ein erstes Teilpixel 41 nimmt Bildanteile mit einem Polarisationswinkel α = 0° auf. Ein zweites Teilpixel 42 nimmt Bildanteile mit einem Polarisationswinkel α = 135° auf. Ein drittes Teilpixel 43 nimmt Bildanteile mit einem Polarisationswinkel α = 90° auf. Und ein viertes Teilpixel 44 nimmt Bildanteile mit einem Polarisationswinkel α = 45° auf.

Beide vorstehend beschriebene Varianten einer Polarisationskamera lassen sich im Rahmen der Erfindung in einer Vorrichtung nach den Fig. 1, 2 zusammen mit einer polarisierten Beleuchtung nach Fig. 5 einsetzen. Die beiden Folienbahnen 11, 12 weisen nämlich aufgrund ihres Herstellprozesses eine Vorzugsrichtung auf, welche die Polarisationsrichtung des auftreffenden und dann reflektierten Lichts beeinflusst. Bildkontraste insbesondere im Bereich der Siegelränder 15 (Fig. 3) werden durch die Veränderung des Polarisationszustandes soweit gesteigert, dass Fehler in den Siegelrändern ohne weiteres erkennbar werden, und dass unter Umständen auf eine kontraststeigernde, jedoch kostenintensive Schwärzung oder auf eine andere Behandlung der Oberfläche 23 (Fig. 2) verzichtet werden kann. Die übrigen Merkmalen und Bezugszeichen können einzeln oder in Summe unverändert übernommen werden.

## Patentansprüche

1. Vorrichtung zum Herstellen von gefüllten Folienbeuteln (50), umfassend zu verschiedenen Bearbeitungsstationen (1, 2, 3, 4) verfahrbare Plattenelemente (9) mit jeweils mindestens einer Formmulde (10), eine erste Bearbeitungsstation (1) mit einer Tiefziehanordnung (5) zum Tiefziehen einer Basisfolie (11) in die Formmulden (10) der Plattenelemente (9) zur Bildung von Füllkavitäten (13) in der Basisfolie (11), eine zweite Bearbeitungsstation (2) mit einer Füllanordnung (6) zum Füllen der Füllkavitäten (13) mit einem Füllgut (14), sowie eine dritte Bearbeitungsstation (3) mit einer Siegelanordnung (7) zum Aufsiegeln einer Deckfolie (12) auf die Basisfolie (11) unter Bildung jeweils eines um die jeweilige Füllkavität (13) geschlossen umlaufenden Siegelrandes (15), wobei der dritten Bearbeitungsstation (3) mit der Siegelanordnung (7) eine vierte Bearbeitungsstation (4) mit einer Prüfeinrichtung (8) zur optischen Erfassung und zur Qualitätsbewertung des Siegelrandes (15) nachgeordnet ist, wobei die Prüfeinrichtung (8) eine optische Kamera (16), eine Beleuchtungseinrichtung (17), sowie eine Auswerteeinheit (18) für die von der Kamera (16) aufgenommenen Bilder umfasst,
**dadurch gekennzeichnet, dass** die Prüfeinrichtung (8) Mittel zur Kontraststeigerung der von der Kamera (16) aufgenommenen Bilder umfasst, dass die Mittel zur Kontraststeigerung einen Polarisationsfilter (21) der Beleuchtungseinrichtung (17) und eine Ausbildung der Kamera (16) als Polarisationskamera umfassen, und dass eine Polarisationsrichtung des Polarisationsfilters (21) in einem Polarisationswinkel (α) zu einer Bewegungsrichtung (25) der Plattenelemente (9) ausgerichtet ist, wobei der Polarisationswinkel (α) in einem Bereich von 30° bis 60° liegt.

2. Vorrichtung nach Anspruch 1,
**dadurch gekennzeichnet, dass** das die Mittel zur Kontraststeigerung eine reflexionsmindernde Oberfläche (23) der Plattenelemente (9) umfassen.

3. Vorrichtung nach Anspruch 2,
**dadurch gekennzeichnet, dass** die reflexionsmindernde Oberfläche (23) durch eine Schwärzung der Oberfläche (23) gebildet ist.

4. Vorrichtung nach einem der Ansprüche 1 bis 3,
**dadurch gekennzeichnet, dass** der Polarisationswinkel (α) 45° beträgt.

5. Vorrichtung nach einem der Ansprüche 1 bis 4,
**dadurch gekennzeichnet, dass** die Plattenelemente (9) mit einer Markierung (22) zur Lageerkennung des Siegelrandes (15) versehen sind.

6. Vorrichtung nach einem der Ansprüche 1 bis 5,
**dadurch gekennzeichnet, dass** die Kamera (16) eine Zeilenkamera ist.

7. Vorrichtung nach Anspruch 6,
**dadurch gekennzeichnet, dass** im Bereich der als Zeilenkamera ausgeführten Kamera (16) ein Encoder (24) zur Bewegungserfassung der Plattenelemente (9) angeordnet ist.

8. Vorrichtung nach Anspruch 7,
**dadurch gekennzeichnet, dass** der Encoder (24) mit einem berührungslosen Sensor und insbesondere mit einem Lasersensor zur Bewegungserfassung der Plattenelemente (9) versehen ist.

9. Vorrichtung nach einem der Ansprüche 1 bis 5,
**dadurch gekennzeichnet, dass** die Kamera (16) eine Flächenkamera ist.

10. Vorrichtung nach einem der Ansprüche 1 bis 9,
**dadurch gekennzeichnet, dass** die Beleuchtungseinrichtung (17) als Lichtleiste (20) ausgeführt ist, welche quer zu einer Bewegungsrichtung (25) der Plattenelemente (9) angeordnet ist.

## Claims

1. Apparatus for producing filled film bags (50), comprising plate elements (9) which can be conveyed to various processing stations (1, 2, 3, 4), each having at least one mould recess (10), a first processing station (1) with a deep-drawing arrangement (5) for deep-drawing a base film (11) into the mould recesses (10) of the plate elements (9) in order to form filling cavities (13) in the base film (11), a second processing station (2) with a filling arrangement (6) for filling the filling cavities (13) with a filling substance (14), and a third processing station (3) with a sealing arrangement (7) for sealing a cover film (12) onto the base film (11) while respectively forming a continuous circumferential seal edge (15) around each of the filling cavities (13), the third processing station (3) with the sealing arrangement (7) being followed by a fourth processing station (4) with a testing device (8) for optical acquisition and quality assessment of the seal edge (15), the testing device (8) comprising an optical camera (16), an illumination device (17), and an evaluation unit (18) for the images recorded by the camera (16),
**characterized in that** the testing device (8) comprises means for increasing the contrast of the images recorded by the camera (16), **in that** the means for increasing the contrast comprise a polarization filter (21) of the illumination device (17) and a configuration of the camera (16) as a polarization camera, and **in that** a polarization direction of the polarization filter (21) is aligned at a polarization angle (α) with respect to a movement direction (25) of the plate elements (9), the polarization angle (α) lying in a range of from 30° to 60°.

2. Apparatus according to claim 1,
**characterized in that** the means for increasing the contrast comprise a reflection-reducing surface (23) of the plate elements (9).

3. Apparatus according to claim 2,
**characterized in that** the reflection-reducing surface (23) is formed by blackening of the surface (23).

4. Apparatus according to one of claims 1 to 3,
**characterized in that** the polarization angle (α) is 45°.

5. Apparatus according to one of claims 1 to 4,
**characterized in that** the plate elements (9) are provided with a marking (22) for identifying the placement of the seal edge (15).

6. Apparatus according to one of claims 1 to 5,
**characterized in that** the camera (16) is a line scan camera.

7. Apparatus according to claim 6,
**characterized in that** an encoder (24) for acquisition of the movement of the plate elements (9) is arranged in the region of the camera (16) embodied as a line scan camera.

8. Apparatus according to claim 7,
**characterized in that** the encoder (24) is provided with a contactless sensor and in particular with a laser sensor for acquisition of the movement of the plate elements (9).

9. Apparatus according to one of claims 1 to 5,
**characterized in that** the camera (16) is an area scan camera.

10. Apparatus according to one of claims 1 to 9,
**characterized in that** the illumination device (17) is embodied as a strip light (20), which is arranged transversely with respect to a movement direction (25) of the plate elements (9).

## Revendications

1. Dispositif pour la fabrication de sachets en film (50) remplis, comprenant des éléments en plaque (9) qui peuvent être déplacés vers différents postes de traitement (1, 2, 3, 4) et qui comprennent respectivement au moins une cavité de moulage (10), un premier poste de traitement (1) pourvu d'un arrangement d'emboutissage (5) destiné à emboutir un film de base (11) dans les cavités de moulage (10) des éléments en plaque (9) afin de former des cavités de remplissage (13) dans le film de base (11), un deuxième poste de traitement (2) pourvu d'un arrangement de remplissage (6) destiné à remplir les cavités de remplissage (13) avec un matériau de remplissage (14) ainsi qu'un troisième poste de traitement (3) pourvu d'un arrangement de scellement (7) destiné à sceller un film de recouvrement (12) sur le film de base (11) en formant respectivement un bord de scellement (15) entourant de manière fermée la cavité de remplissage (13) respective, un quatrième poste de traitement (4) pourvu d'un appareil de contrôle (8) destiné à la détection optique et à l'évaluation de la qualité du bord de scellement (15) étant disposé après le troisième poste de traitement (3) pourvu de l'arrangement de scellement (7), l'appareil de contrôle (8) comportant une caméra optique (16), un appareil d'éclairage (17) ainsi qu'une unité d'évaluation (18) pour les images enregistrées par la caméra (16), **caractérisé en ce que** l'appareil de contrôle (8) comporte des moyens destinés à accroître le contraste des images enregistrées par la caméra (16), **en ce que** les moyens destinés à accroître le contraste comportent un filtre de polarisation (21) de l'appareil d'éclairage (17) et une configuration de la caméra (16) en tant que caméra de polarisation, et **en ce qu'**une direction de polarisation du filtre de polarisation (21) est orientée selon un angle de polarisation (α) par rapport à une direction de déplacement (25) des éléments en plaque (9), l'angle de polarisation (α) étant compris dans une plage de 30° à 60°.

2. Dispositif selon la revendication 1,
**caractérisé en ce que** les moyens destinés à accroître le contraste comportent une surface (23) réduisant la réflexion des éléments en plaque (9).

3. Dispositif selon la revendication 2,
**caractérisé en ce que** la surface (23) réduisant la réflexion est formée par un noircissement de la surface (23).

4. Dispositif selon l'une des revendications 1 à 3,
**caractérisé en ce que** l'angle de polarisation (α) est de 45°.

5. Dispositif selon l'une des revendications 1 à 4,
**caractérisé en ce que** les éléments en plaque (9) sont pourvus d'un marquage (22) servant à reconnaître la position du bord de scellement (15).

6. Dispositif selon l'une des revendications 1 à 5,
**caractérisé en ce que** la caméra (16) est une caméra linéaire.

7. Dispositif selon la revendication 6,
**caractérisé en ce qu'**un codeur (24) destiné à détecter le mouvement des éléments en plaque (9) est disposé dans la zone de la caméra (16) réalisée sous la forme d'une caméra linéaire.

8. Dispositif selon la revendication 7,
**caractérisé en ce que** le codeur (24) est pourvu d'un capteur sans contact et notamment d'un capteur laser destiné à détecter le mouvement des éléments en plaque (9).

9. Dispositif selon l'une des revendications 1 à 5,
**caractérisé en ce que** la caméra (16) est une caméra matricielle.

10. Dispositif selon l'une des revendications 1 à 9,
**caractérisé en ce que** l'appareil d'éclairage (17) est réalisé sous la forme d'une bande lumineuse (20), laquelle est disposée transversalement à une direction de déplacement (25) des éléments en plaque (9).
